# EUROPÄISCHE PATENTSCHRIFT

(11) **EP 1 740 874 B1**
(45) Veröffentlichungstag und Bekanntmachung des Hinweises auf die Patenterteilung: **11.02.2009**
(21) Anmeldenummer: 05738136.0
(22) Anmeldetag: 20.04.2005
(51) Int. Cl.: F16L 33/22, F16L 13/14

(54) **ROHRVERBINDUNG MIT DEFINIERTER DICHTWIRKUNG**
PIPE JOINT HAVING A DEFINED SEALING EFFECT
RACCORDEMENT DE TUBES A EFFET D'ETANCHEITE DEFINI

(30) Priorität: 26.04.2004 DE 102004020478
(43) Veröffentlichungstag der Anmeldung: 10.01.2007
(73) Patentinhaber: Vulkan Lokring- Rohrverbindungen GmbH & Co. KG, 44653 Herne (DE)
(72) Erfinder: SCHWALM, Dieter, 33813 Oerlinghausen (DE)
(74) Vertreter: Behrendt, Arne
(86) Internationale Anmeldenummer: PCT/EP2005/004191
(87) Internationale Veröffentlichungsnummer: WO 2005/103549

(56) Entgegenhaltungen:
- DE-A1- 19 831 473
- US-A- 6 131 964
- US-B1- 6 450 553

## Beschreibung

Die vorliegende Erfindung betrifft eine Verbindung eines Rohres mit einem Stutzen nach dem Oberbegriff des Anspruch 1. Eine derartige Verbindung ist aus US 6 450 553 B1 bekannt.

Eine andere Verbindung ist als zweites Ausführungsbeispiel der DE 44 12 615 A1 bekannt.

Nachteilig bei der vorbekannten Verbindung ist, dass das Rohr prinzipbedingt auf den Stutzen aufgeschoben und dabei radial gedehnt wird. Der Dehnvorgang führt gerade bei der Verwendung von Metallrohren zu erhöhten Montagekräften oder macht eine Erwärmung der Rohrenden vor der Montage erforderlich. Praktisch ist die Verwendung dieser Verbindung auf Kunststoffrohre beschränkt. Desweiteren kann das Dichtelement, welches in die Kammer des Stutzens eingelegt ist, beim Aufschieben des Rohres in Aufschieberichtung verdrillt oder sogar über die Außenkante der Kammer in den Spalt zwischen Rohr und Stützen extrudiert werden. Beides führt zu einer Beschädigung des Dichtelements führen.

Aufgabe der vorliegenden Erfindung ist es daher, eine Verbindung anzugeben, die unter Aufwendung von geringen Kräften geschlossen werden kann und dessen Dichtelement nicht Gefahr läuft, bei der Montage beschädigt zu werden.

Gelöst wird diese Aufgabe durch eine Verbindung gemäß Anspruch 1.

Eine grundlegende Idee der vorliegenden Erfindung besteht darin, das Rohr unverformt in den Stutzen einzustecken und erst durch Aufschieben des Ringes auf den Stutzen beide Teile so zu verformen, dass die gewünschte Festigkeit und Dichtheit der Verbindung entsteht. Verformt wird die Verbindung an zwei Stellen, nämlich im Bereich der Kammer und vorzugsweise endseitig. Durch das Aufschieben des Ringes auf den Stutzen erfährt die Kammer eine definierte Verformung, welche das Dichtelement in der Weise komprimiert, dass es die bestmögliche Dichtwirkung erzielt. Überhöhte Spannungen, die insbesondere Weichdichtungen beschädigen können, werden hierdurch wirksam vermieden.

Die vorteilhafte Weiterbildung der Erfindung besteht darin, die Kammer und das eingelegte Dichtelement dergestalt zu dimensionieren, dass das Dichtelement allein bei in den Stutzen eingestecktem Rohr nicht an dem Rohr anliegt. Das Dichtelement soll vielmehr erst durch Aufschieben des Ringes gegen das Rohr gepresst werden. Der entscheidende Vorteil dieser Weiterbildung besteht darin, dass das Dichtelement beim Einstecken des Rohres nicht verdrillt werden kann. Eine Beschädigung des Dichtelementes bei der Montage ist durch diese Maßnahme fast ausgeschlossen.

Vorteilhafterweise wird der Stutzen mit einer Anlageschulter versehen. Diese dient dazu, von einem zangenartigen Montagewerkzeug gegriffen zu werden, mittels welchem der Ring auf den Stutzen aufgeschoben wird. Derartige Montagewerkzeuge sind an sich bekannt, sie gleichen einer Zange, bei denen eine erste Wange an der Anlageschulter und eine weitere Wange an dem endseitigen Ringabschluss angreift.

Vorzugsweise ist die Anlageschulter mit einer Auflagefläche ausgestattet, auf welcher der Ring bei geschlossener Verbindung mit einem dritten zylindrischen Bereich aufliegt. Der Ring erhält hierdurch einen besonders sicheren Sitz. Desweiteren kann die Wange, mit welcher das Montagewerkzeug an der Montageschulter anliegt, zugleich als Anschlag für den aufzuschiebenden Ring dienen.

Der Durchmesser des zweiten zylindrischen Abschnitts sollte so bemessen sein, dass er das Rohr mehr als 0,2% radial einschnürt. Für Stahlrohre bedeutet eine Stauchung von 0,2% eine plastische Verformung, durch welche die Verbindung teilweise formschlüssig und daher besonders stabil wird.

Als Dichtelement eignet sich insbesondere ein Runddichtring (O-Ring). Runddichtringe haben sich als Standard-industriedichtungen etabliert und sind in vielfältigen Durchmessern und Werkstoffen kostengünstig verfügbar.

Vorzugsweise erhält die Kammer die Gestalt eines Rotationskörpers, dessen Rotationsachse der Längsachse der Verbindung entspricht und deren Rotationsfläche ein Halbkreis ist. Eine derartige (Rund-)Kammer eignet sich insbesondere zur Aufnahme eines Runddichtringes. Ebenso können Kammern mit rechteckigem Querschnitt (Rechteckkammern) vorgesehen werden, in die ebenfalls Runddichtringe oder andere Arten von Dichtelementen Platz finden.

Die vorliegende Erfindung soll nun anhand von Zeichnungen eines Ausführungsbeispieles erläutert werden. Es zeigen hierzu:
- Fig. 1:: Verbindung mit Rundkammer, geöffnet;
- Fig. 2:: Verbindung mit Rundkammer, geschlossen;
- Fig. 3:: Ring;
- Fig. 4:: Stutzen mit Rundkammer;
- Fig. 5:: Verbindung für zwei Rohre, mit Rundkammern, teilweise geöffnet, teilweise geschlossen;
- Fig. 6:: Stutzen mit Rechteckkammer;
- Fig. 7:: Verbindung für zwei Rohre, mit Rechteckkammern, teilweise geöffnet, teilweise geschlossen.

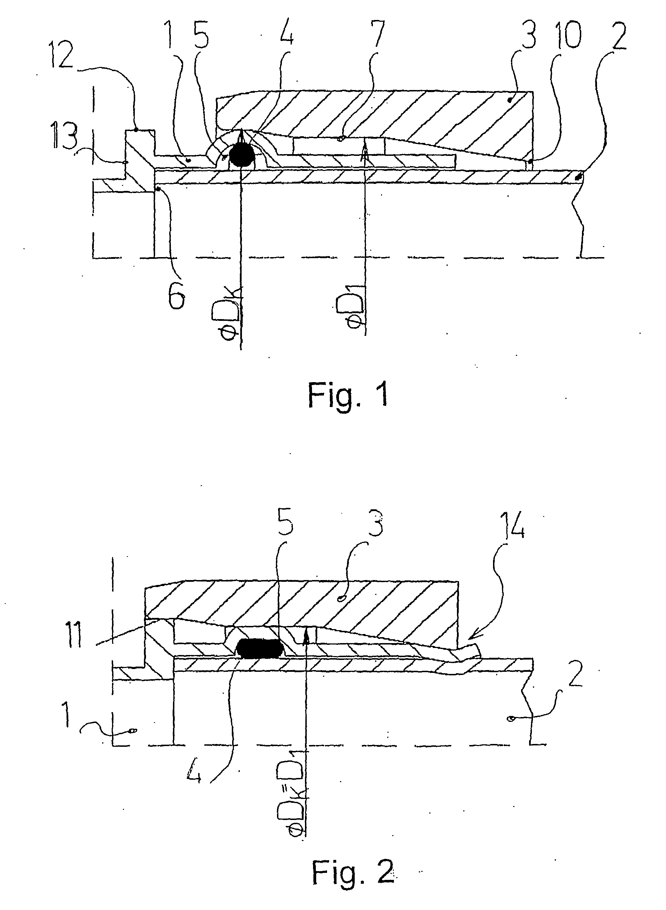

Eine erfindungsgemäße Verbindung umfasst einfachstenfalls einen hülsenartigen Stutzen 1, ein Rohr 2, einen Ring 3 und ein Dichtelement 4, welches in einer Kammer 5 des Stutzens 1 eingelegt ist. Bei dem Dichtelement 4 handelt es sich hier um einen handelsüblichen Runddichtring aus einem Elastomer. Die übrigen Bestandteile der Verbindung bestehen aus Metall, können aber auch aus Kunststoff sein. Die Kammer 5 ist ais eine lokale Durchmesseraufweitung des hülsenartigen Stutzens 1 ausgeführt. Das Rohr 2 wird verformungsfrei in den Stutzen 1 eingesteckt. Die Einstecktiefe wird von einem Anschlag 6 begrenzt. In den Figuren 1 bis 5 ist die Kammer 5 eine Rundkammer, also ein Rotationskörper, dessen Rotationsfläche ein Halbkreis ist. Das Dichtelement 4 liegt stets an der Wandung der Kammer 5 an, selbst bei geöffneter Verbindung steht es leicht unter Spannung, um nicht aus der Kammer 5 heraus zu fallen. Der Innendurchmesser des unverformten Dichtelementes *D*_{D} ist größer als der Außendurchmesser des Rohres *D*_{R}. Dies hat zur Folge, dass das Dichtelement 4 beim Einstecken des Rohres 2 in den Stutzen 1 nicht mit dem Rohr 2 in Berührung kommt und folglich nicht verdrillt oder anderweitig beschädigt werden kann.

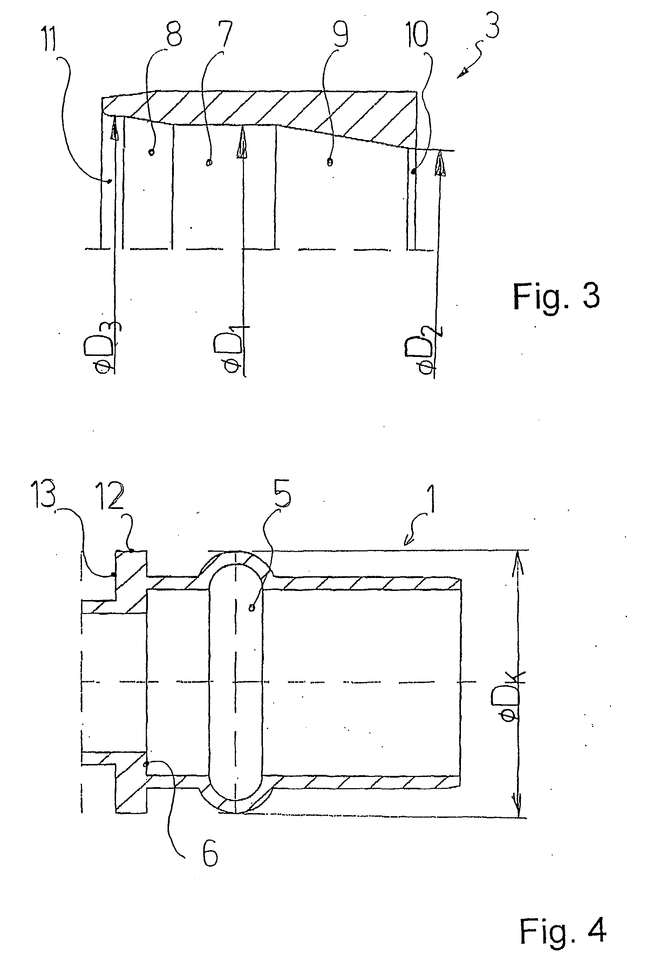

Zum Schließen der Verbindung wird erst das Rohr 2 in den Stutzen 1 eingesteckt und dann der Ring 3 auf den Stutzen 1 aufgeschoben. An seiner Innenseite weist der Ring 3 fünf Funktionsflächen auf; vgl. hierzu Figur 3. Etwa mittig erstreckt sich ein erster zylindrischer Bereich 7, welcher beiderseits von konischen Bereichen 8, 9 flankiert ist. Über den konischen Bereich 9 verjüngt sich der Ring 3 zu einem zweiten zylindrischen Bereich 10 mit dem Durchmesser *D*₂. Über die andere konische Fläche 8 weitet sich der Ring 3 zu seiner Vorderseite hin auf und weist vorderseitig einen dritten zylindrischen Bereich 11 auf, dessen Durchmesser im Folgenden mit *D*₃ bezeichnet wird. Zur Erleichterung des Aufschiebens ist der dritte zylindrische Bereich 11 nach außen hin abgerundet.

Zum Schließen der Verbindung wird der Ring 3 auf den Stutzen 1 aufgeschoben, bis der dritte zylindrische Bereich 11 auf einer Auflagefläche 12 aufliegt, die Teil einer Anlageschulter 13 des Stutzens 1 ist. Die Anlageschulter 13 dient als Kraftangriffspunkt für die Wange eines nicht dargestellten, zangenartigen Montagewerkzeugs, dessen zweite Wange endseitig in Ring 3 greift und ihn auf den Stutzen 1 schiebt. Beim Aufschieben des Ringes 3 dient die Wange, die an der Anlageschulter 13 angreift, zugleich als Anschlag für den Ring 3.

Der Außendurchmesser der Kammer *D*_{K} entspricht bei geöffneter Verbindung etwa dem Durchmesser *D*₃ des dritten zylindrischen Bereiches 11. Beim Aufschieben reduziert der erste konische Bereich 8 den Durchmesser *D*_{K} der Kammer 5 bis auf den Durchmesser *D*₁ des ersten zylindrischen Bereiches 7. Dabei wird das Dichtelement 4 dergestalt verformt, dass es sich einerseits an der Wandung der Kammer 5 und andererseits an der Wandung des Rohres 2 anschmiegt; siehe hierzu Figur 2. Die Kammer 5 ist im verformten Zustand nahezu vollständig von dem Dichtelement 4 ausgefüllt. Stutzen 1 und Rohr 2 werden hierdurch gegeneinander abgedichtet.

Beim Aufschieben des Ringes 3 wird zugleich ein endseitiger Abschnitt 14 des hülsenartigen Stutzens 1 punktuell gegen die darunter liegende Wandung des Rohres 2 gepresst. Dies erfolgt über den zweiten konischen Bereich 9. Durchmesser *D*₂ des zweiten zylindrischen Bereiches 10 bestimmt die radiale Einschnürung des Rohres. Bei Verwendung von Stahlrohren sollte diese mehr als 0,2% betragen, so dass es zu einer plastischen Verformung kommt. Auf diese Weise entsteht Formschluss, der axiale Kräfte zwischen Stutzen 1 und Rohr 2 aufnehmen kann. Das Dichtelement 4 wird hierdurch entlastet. Darüber hinaus dient die verpresste Stelle an dem endseitigen Abschnitt 14 des Stutzens 1 als Notdichtung, falls das Dichtelement 4 versagen sollte.

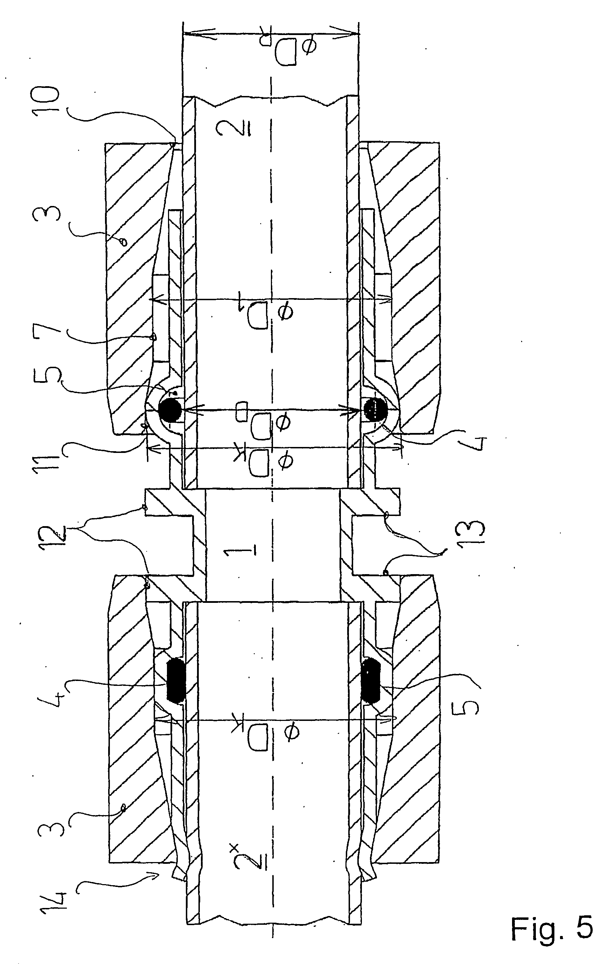

Figur 5 zeigt ein Anwendungsbeispiel zur Verbindung von zwei Rohren 2, 2*. Der Stutzen 1 ist hierbei symmetrisch ausgeführt. Im linken Teil der Zeichnung ist die Verbindung geöffnet, im rechten Teil ist sie geschlossen.

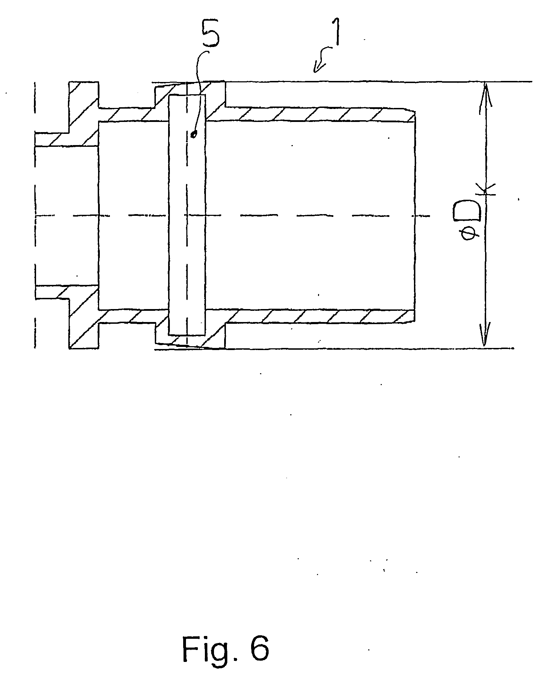

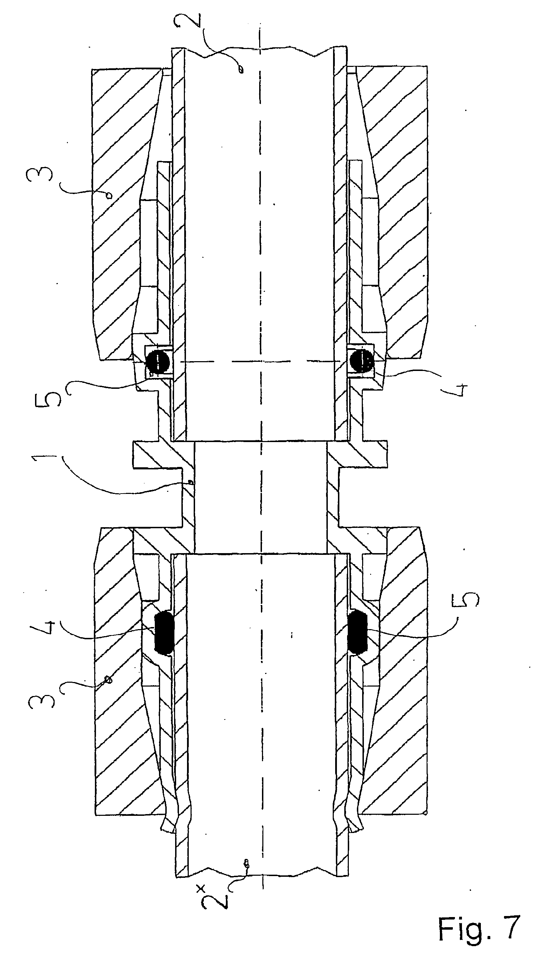

Die Figuren 6 und 7 zeigen eine Gestaltvariante der Verbindung, bei der die Kammer 5 einen rechteckigen Querschnitt aufweist. In die rechteckige (Rechteck)-Kammer 5 kann ein Runddichtring oder ein anderes Dichtelement 4 eingelegt werden.

## Patentansprüche

1. Verbindung eines Rohres (2) mit einem Stutzen (1), bei welcher der Stutzen (1) eine Kammer (5) aufweist, in die ein Dichtelement (4) eingelegt ist, welches bei geschlossener Verbindung einerseits an der Wandung der Kammer (5) und andererseits an dem Rohr (2) anliegt, wobei die Verbindung einen Ring (3) umfasst, der zum Schließen der Verbindung auf den Stutzen (1) aufschiebbar ist und der an seiner Innenseite zwei zylindrische Bereiche (7, 10) aufweist, wobei der Durchmesser (*D*₁) des ersten zylindrischen Bereiches (7) größer ist als der Durchmesser (*D*₂) des zweiten zylindrischen Bereiches (10) und wobei der erste zylindrische Bereich (7) und der zweite zylindrische Bereich (10) über einen konischen Bereich (9) miteinander verbunden sind, wobei das Rohr (2) in den Stutzen (1) einsteckbar ist und die Kammer (5) als Durchmesseraufweitung des Stutzens (1) ausgeführt ist, deren Außendurchmesser (*D*_{K}) bei geöffneter Verbindung den Durchmesser (*D*₁) des ersten zylindrischen Bereichs (7) übersteigt und bei geschlossener Verbindung auf diesen Durchmesser (*D*₁) reduziert ist, und wobei der Stutzen (1) eine Anlageschulter (13) aufweist, welche dafür bestimmt ist, von einer Wange eines zahnartigen Montagewerkzeugs gegriffen zu werden, mittels welchem der Ring (2) auf den Stutzen (1) aufschiebbar ist,
**dadurch gekennzeichnet, dass** der zweite zylindrische Bereich (10) bei geschlossener Verbindung das Rohr (2) radial einschnürt und auf diese Weise Rohr (2) und Stutzen (1) miteinander verpresst, wobei beim Aufschieben des Ringes (3) über den konischen Bereich (9) ein endseitiger Abschnitt (14) des Stutzens (1) gegen die darunter liegende Wandung des Rohres (2) gepresst wird, und dass die Anlageschulter (13) eine Auflagefläche (12) aufweist, auf welcher der Ring (2) bei geschlossener Verbindung mit einem dritten zylindrischen Bereich (11) aufliegt.

2. Verbindung nach Anspruch 1, **dadurch gekennzeichnet, dass** bei in den Stutzen (1) eingestecktem Rohr (2) und zugleich auf den Stutzen (1) nicht aufgeschobenen Ring (3) das Dichtelement (4) an dem Rohr (2) nicht anliegt.

3. Verbindung nach Anspruch 1, **dadurch gekennzeichnet, dass** der Durchmesser (*D*₂) des zweiten zylindrischen Bereichs (10) so bemessen ist, dass bei geschlossener Verbindung das Rohr (2) mehr als 0,2% radial eingeschnürt ist.

4. Verbindung nach Anspruch 1, **dadurch gekennzeichnet, dass** das Dichtelement (4) ein Runddichtring ist.

5. Verbindung nach Anspruch 1, **dadurch gekennzeichnet, dass** die Kammer (5) die Gestalt eines Rotationskörpers aufweist, dessen Rotationsachse der Längsachse der Verbindung entspricht und dessen Rotationsfläche ein Halbkreis ist.

6. Verbindung nach Anspruch 1, **dadurch gekennzeichnet, dass** die Kammer (5) die Gestalt eines Rotationskörpers aufweist, dessen Rotationsachse der Längsachse der Verbindung entspricht und dessen Rotationsfläche ein Rechteck ist.

## Claims

1. A joint of a pipe (2) with a socket (1), wherein the socket (1) has a chamber (5), into which a sealing element (4) is placed, that in the case of a closed joint nestles against the wall of the chamber (5) on the one hand and against the pipe (2) on the other, while the joint comprises a ring (3) that for the purpose of closing the joint can be pushed onto the socket (1) and on its inside has two cylindrical sections (7, 10), while the diameter (*D*₁) of the first cylindrical section (7) is greater than the diameter (*D*₂) of the second cylindrical section (10), and wherein the first cylindrical section (7) and the second cylindrical section (10) are connected with one another by way of a conical section (9), wherein the pipe (2) can be pushed into the socket (1) and the chamber (5) is executed as an expansion of the diameter of the socket (1), the outside diameter (*D*_{K}) of which exceeds the diameter (*D*₁) of the first cylindrical section (7) in the case of an open joint and is reduced to this diameter (*D*₁) when the joint is closed, and whereby the socket (1) has a locating shoulder (13), the purpose of which is to be grasped by a cheek of a tooth-like assembly tool, by means of which the ring (2) can be pushed onto the socket (1),
**characterized in that**
the second cylindrical section (10) radially constricts the pipe (2) in the case of a closed joint and in this manner compresses pipe (2) and socket (1) together, wherein when the ring (3) is pushed on over the conical section (9), an end-side section (14) of the socket (1) is pressed against the wall of the pipe (2) that lies underneath, and that the locating shoulder (13) has a bearing surface (12) on which the ring (2) rests with a third cylindrical section (11) when the joint is closed.

2. A joint according to claim 1, **characterised in that** when the pipe (2) is inserted into the socket (1) and the ring (3) is not pushed onto the socket (1), the sealing element (4) does not abut against the pipe (2).

3. A joint according to claim 1, **characterised in that** the diameter (D₂) of the second cylindrical section (10) is to be so dimensioned, that in the case of a closed joint it constricts the pipe (2) by more than 0.2 %.

4. A joint according to claim 1, **characterised in that** the sealing element (4) is a circular sealing ring.

5. A joint according to claim 1, **characterised in that** the chamber (5) has the design of a body of rotation, the axis of its rotation corresponds to the longitudinal axis of the joint and the rotational surface of which is a semi-circle.

6. A joint according to claim 1, **characterised in that** the chamber (5) has the design of a body of rotation, the axis of its rotation corresponds to the longitudinal axis of the joint and the rotational surface of which is a rectangle.

## Revendications

1. Raccordement d'un tube (2) à une tubulure (1), où la tubulure (1) présente une chambre (5) dans laquelle est placé un élément d'étanchéité (4) qui, lorsque le raccordement est fermé, s'applique d'une part à la paroi de la chambre (5) et d'autre part au tube (2), où le raccordement comprend un anneau (3) qui, pour fermer le raccordement, peut être poussé sur la tubulure (1) et qui présente à son côté intérieur deux zones cylindriques (7, 10), où le diamètre (D₁) de la première zone cylindrique (7) est plus grand que le diamètre (D₂) de la deuxième zone cylindrique (10) et où la première zone cylindrique (7) et la deuxième zone cylindrique (10) sont reliées entre elles par une zone conique (9), où le tube (2) peut être emboîté dans la tubulure (1) et la chambre (5) est réalisée comme élargissement de diamètre de la tubulure (1), dont le diamètre extérieur (D_{K}), lorsque le raccordement est ouvert, dépasse le diamètre (D₁) de la première zone cylindrique (7) et, lorsque le raccordement est fermé, est réduit à ce diamètre (D₁), et où la tubulure (1) présente un épaulement d'application (13) qui est destiné à être saisi par une joue d'un outil de montage en forme de dent au moyen duquel l'anneau (2) peut être poussé sur la tubulure (1),
**caractérisé en ce que** la deuxième zone cylindrique (5), lorsque le raccordement est fermé, serre le tube (2) radialement et compresse ainsi l'un avec l'autre le tube (2) et la tubulure (1), où lors de la poussée de l'anneau (3) sur la zone conique (9), une section côté extrémité (14) de la tubulure (1) est pressée contre la paroi située en dessus du tube (2), et **en ce que** l'épaulement d'application (13) présente une face d'application (12), sur laquelle l'anneau (3), lorsque le raccordement est fermé, repose avec une troisième zone cylindrique (11).

2. Raccordement selon la revendication 1, **caractérisé en ce que**, lorsque le tube (2) est emboîté dans la tubulure (1) et que l'anneau (3) n'est pas poussé sur la tubulure (1), l'élément d'étanchéité (4) ne s'applique pas au tube (2).

3. Raccordement selon la revendication 1, **caractérisé en ce que** le diamètre (D₂) de la deuxième zone cylindrique (10) est dimensionné de façon que lorsque le raccordement est fermé, le tube (2) est serré radialement selon plus de 0,2%.

4. Raccordement selon la revendication 1, **caractérisé en ce que** l'élément d'étanchéité (4) est une bague d'étanchéité ronde.

5. Raccordement selon la revendication 1, **caractérisé en ce que** la chambre (5) présente la forme d'un corps de rotation dont l'axe de rotation correspond à l'axe longitudinal du raccordement et dont la face de rotation est un demi-cercle.

6. Raccordement selon la revendication 1, **caractérisé en ce que** la chambre (5) présente la forme d'un corps de rotation dont l'axe de rotation correspond à l'axe longitudinal du raccordement et dont la face de rotation est un rectangle.
